(19) Europäisches Patentamt
European Patent Office
Office européen des brevets

(11) EP 4 674 879 A1

(12) **EUROPEAN PATENT APPLICATION**
published in accordance with Art. 153(4) EPC

(43) Date of publication:
**07.01.2026 Bulletin 2026/02**

(21) Application number: **24763739.0**

(22) Date of filing: **21.02.2024**

(51) International Patent Classification (IPC):
***C08G 2/06*** *(2006.01)*

(52) Cooperative Patent Classification (CPC):
**C08G 2/06**

(86) International application number:
**PCT/JP2024/006187**

(87) International publication number:
**WO 2024/181258 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.02.2023 JP 2023029522**

(71) Applicant: **MITSUBISHI GAS CHEMICAL COMPANY, INC.**
**Chiyoda-ku**
**Tokyo 100-8324 (JP)**

(72) Inventor: **OKADA, Takuya**
**Yokkaichi-shi, Mie 510-0886 (JP)**

(74) Representative: **Müller-Boré & Partner Patentanwälte PartG mbB**
**Friedenheimer Brücke 21**
**80639 München (DE)**

(54) **CATIONIC POLYMERIZATION INITIATOR COMPOSITION, AND METHOD FOR PRODUCING OXYMETHYLENE COPOLYMER AND MOLDED ARTICLE USING SAME**

(57) Provided is means for preventing corrosion of metal by a fluorine atom-containing cationic polymerization initiator. A cationic polymerization initiator composition including a fluorine atom-containing cationic polymerization initiator (A), and a hydrophilic ether solvent (B) which does not have an acetal structure and an active hydroxyl group, wherein a content of the hydrophilic ether solvent (B) is 2.5 mass% or more with respect to a total mass of the cationic polymerization initiator composition.

EP 4 674 879 A1

## Description

### Technical Field

The present invention relates to a cationic polymerization initiator composition, a method for producing an oxymethylene copolymer and a molded article using the cationic polymerization initiator composition, and the like.

### Background Art

Oxymethylene copolymers (polyacetal copolymers) are excellent in strength, elastic modulus, impact resistance, slippage and the like, and thus have been widely used as fibers, films, gears, bearings and the like for electronic equipment, vehicles and the like.

Production of such an oxymethylene copolymer typically involves the use of a cationic polymerization initiator.

For example, Patent Literature 1 discloses an invention that relates to a method for sending a solution in which a solution containing a cationic polymerization catalyst (cationic polymerization initiator) and an organic solvent is sent using a pipe, wherein an arithmetic average surface roughness (Ra) of an inner wall of the pipe is 3 μm or less. Patent Literature 1 indicates that by the invention, generation of scale (deposit generated inside the pipe) which is generated due to, for example, aggregation of the cationic polymerization initiator can be suppressed, and an oxymethylene copolymer can be stably produced with a high yield for a long period.

### Citation List

### Patent Literature

Patent Literature 1: Japanese Patent Laid-Open No. 2017-149853

### Summary of Invention

### Technical Problem

However, it has been found that the use of a cationic polymerization initiator, in particular, a cationic polymerization initiator containing a fluorine atom (fluorine atom-containing cationic polymerization initiator) may lead to corrosion of metal which forms a pipe, a tank and the like.

To address this, the present invention provides means for preventing corrosion of metal by a fluorine atom-containing cationic polymerization initiator.

### Solution to Problem

The present invention is, for example, as follows.

[1] A cationic polymerization initiator composition comprising a fluorine atom-containing cationic polymerization initiator (A), and a hydrophilic ether solvent (B) which does not have an acetal structure and an active hydroxyl group, wherein a content of the hydrophilic ether solvent (B) is 2.5 mass% or more with respect to a total mass of the cationic polymerization initiator composition.

[2] The cationic polymerization initiator composition according to [1], wherein the fluorine atom-containing cationic polymerization initiator (A) comprises a boron trifluoride compound.

[3] The cationic polymerization initiator composition according to [1] or [2], wherein the fluorine atom-containing cationic polymerization initiator (A) comprises an aryl boron fluoride compound.

[4] The cationic polymerization initiator composition according to any one of [1] to [3], wherein the hydrophilic ether solvent (B) comprises at least one of chain ether containing 2 or more oxygen atoms and cyclic ether containing 2 or more oxygen atoms.

[5] The cationic polymerization initiator composition according to [4], wherein the content of the hydrophilic ether solvent (B) is 2.5 to 60 mass% with respect to the total mass of the cationic polymerization initiator composition.

[6] The cationic polymerization initiator composition according to any one of [1] to [3], wherein the hydrophilic ether solvent (B) comprises at least one of chain ether containing one oxygen atom and cyclic ether containing one oxygen atom.

[7] The cationic polymerization initiator composition according to [6], wherein the content of the hydrophilic ether

solvent (B) is 2.5 to 20 mass% with respect to the total mass of the cationic polymerization initiator composition.

[8] A method for producing an oxymethylene copolymer, comprising a polymerization step of preparing an oxymethylene polymer from a reaction solution which comprises a polymerization raw material (C) containing 1,3,5-trioxane, and the cationic polymerization initiator composition according to any one of [1] to [7].

[9] The production method according to [8], wherein a content of a hydrophilic ether solvent (B) in the reaction solution is 18 ppm or more with respect to 1,3,5-trioxane.

[10] The production method according to [9], wherein the content of the hydrophilic ether solvent (B) in the reaction solution is 18 to 100 ppm with respect to 1,3,5-trioxane.

[11] A method for producing a molded article, comprising molding an oxymethylene polymer produced by the method according to any one of [8] to [10].

Advantageous Effects of Invention

According to the present invention, corrosion of metal by a fluorine atom-containing cationic polymerization initiator can be prevented. Accordingly, it is possible to suppress, for example, degradation of production equipment, deterioration of productivity of the oxymethylene copolymer, and deterioration of the physical properties of the oxymethylene copolymer obtained.

Description of Embodiment

Hereinafter, a mode for carrying out the present invention will be described in detail.

1. Cationic polymerization initiator composition

A cationic polymerization initiator composition according to the present invention comprises a fluorine atom-containing cationic polymerization initiator (A), and a hydrophilic ether solvent (B) which does not have an acetal structure and an active hydroxyl group. Here, the content of the hydrophilic ether solvent (B) is 2.5 mass% or more with respect to the total mass of the cationic polymerization initiator composition.

The cationic polymerization initiator composition according to the present invention does not cause corrosion of metal by the fluorine atom-containing cationic polymerization initiator (A). The reason for this is, for example, as follows. Specifically, when a cationic polymerization initiator containing a fluorine atom (fluorine atom-containing cationic polymerization initiator (A)) is used, a metal corroding component such as hydrofluoric acid (HF) may be generated by water existing inside the system. In this case, the metal corroding component corrodes metal which forms a pipe, a tank and the like, so that production equipment with the pipe, the tank and the like is likely to degrade. Metal components eluted due to the corrosion of metal can inhibit the polymerization reaction, resulting in deterioration of productivity of the oxymethylene copolymer, and deterioration of the physical properties of the oxymethylene copolymer obtained.

On the other hand, the cationic polymerization initiator composition according to the present invention comprises, together with the fluorine atom-containing cationic polymerization initiator (A), a predetermined amount of the hydrophilic ether solvent (B) which does not have an acetal structure and an active hydroxyl group (hereinafter, sometimes referred to simply as a "hydrophilic ether solvent (B)"). Since the hydrophilic ether solvent (B) is comprised, generation of a metal corroding component can be suppressed. Accordingly, corrosion of metal which forms a pipe, a tank and the like can be suppressed, and degradation of production equipment can be suppressed. In addition, since the suppression of corrosion of metal leads to suppression of elution of metal components, inhibition of the polymerization reaction by metal components can be prevented. As a result, it is possible to suppress deterioration of productivity of the oxymethylene copolymer and deterioration of the physical properties of the oxymethylene copolymer obtained.

(1) Fluorine atom-containing cationic polymerization initiator (A)

The fluorine atom-containing cationic polymerization initiator (A) has a function to accelerate the copolymer reaction by acting on 1,3,5-trioxane and/or a comonomer to generate a cationically active species, and the like.

The fluorine atom-containing cationic polymerization initiator (A) is not limited, and examples thereof include boron trifluoride compounds, aryl boron fluoride compounds, and fluorine atom-containing protonic acids.

Examples of the boron trifluoride compound include a boron trifluoride dimethyl ether complex ($BF_3 \cdot Me_2O$), a boron trifluoride diethyl ether complex ($BF_3 \cdot Et_2O$), a boron trifluoride dibutyl ether complex ($BF_3 \cdot Bu_2O$), a boron trifluoride tetrahydrofuran complex ($BF_3 \cdot THF$), boron trifluoride dihydrate ($BF_3 \cdot 2H_2O$), a boron trifluoride methanol complex ($BF_3 \cdot CH_3OH$), a boron trifluoride phenol complex ($BF_3 \cdot 2C_6H_5OH$), a boron trifluoride acetic acid complex ($BF_3 \cdot 2CH_3COOH$), and a boron trifluoride ethylamine complex ($BF_3 \cdot C_2H_5NH_2$).

Examples of the aryl boron fluoride compound include triphenylborane, tris(pentafluorophenyl)borane (TPB),

bis(pentafluorophenyl)fluoroborane, pentafluorophenyldifluoroborane, tris(2,3,4,5-tetrafluorophenyl)boron, tris(2,3,4,6-tetrafluorophenyl)boron, tris(2,3,5,6-tetrafluorophenyl)boron, tris(2,3,5-trifluorophenyl)boron, tris(2,4,6-trifluorophenyl) boron, tris(1,3-difluorophenyl)boron, tris(2,3,5,6-tetrafluoro-4-methylphenyl)boron, tris(2,3,4,6-tetorafluoro-5-methylphenyl)boron, tris(2,4,5-trifluoro-6-methylphenyl)boron, tris(2,3,6-trifluoro-4-methylphenyl)boron, tris(2,4,6-trifluoro-3-methylphenyl)boron, tris(2,6-difluoro-3-methylphenyl)boron, tris(2,4-difluoro-5-methylphenyl)boron, tris(3,5-difluoro-2-methylphenyl)boron, tris(4-methoxy-2,3,5,6-tetrafluorophenyl)boron, tris(3-methoxy-2,4,5,6-tetrafluorophenyl)boron, tris(2-methoxy-3,5,6-trifluorophenyl)boron, tris(3-methoxy-2,5,6-trifluorophenyl)boron, tris(3-methoxy-2,4,6-trifluorophenyl)boron, tris(2-methoxy-3,5-difluorophenyl)boron, tris(3-methoxy-2,6-difluorophenyl)boron, tris(3-methoxy-4,6-difluorophenyl)boron, tris(2-methoxy-4,6-difluorophenyl)boron, and tris(4-methoxy-2,6-difluorophenyl)boron. These aryl boron fluoride compounds may be a coordination compound coordinated with water (hydrate), ammonia, dimethyl ether, diethyl ether, dibutyl ether, phenol, ethylamine or the like, and the aryl boron fluoride compound includes such coordination compounds.

The fluorine atom-containing protonic acid is not limited, and examples thereof include trifluoroacetic acid ($CF_3COOH$), and trifluoromethanesulfonic acid ($CF_3SO_3H$).

In an embodiment, the fluorine atom-containing cationic polymerization initiator (A) preferably comprises a boron trifluoride compound, more preferably comprises at least one selected from the group consisting of a boron trifluoride dimethyl ether complex ($BF_3 \cdot Me_2O$), a boron trifluoride diethyl ether complex ($BF_3 \cdot Et_2O$), a boron trifluoride dibutyl ether complex ($BF_3 \cdot Bu_2O$), and a boron trifluoride tetrahydrofuran complex ($BF_3 \cdot THF$), and further more preferably comprises a boron trifluoride diethyl ether complex ($BF_3 \cdot Et_2O$).

In an embodiment, the fluorine atom-containing cationic polymerization initiator (A) preferably comprises an aryl boron fluoride compound, more preferably comprises at least one selected from the group consisting of tris(pentafluorophenyl)borane (TPB), bis(pentafluorophenyl)fluoroborane, pentafluorophenyldifluoroborane, tris(2,3,4,5-tetrafluorophenyl)boron, tris(2,3,4,6-tetrafluorophenyl)boron, tris(2,3,5,6-tetrafluorophenyl)boron, tris(2,3,5-trifluorophenyl)boron, tris(2,4,6-trifluorophenyl)boron, tris(1,3-difluorophenyl)boron, tris(2,3,5,6-tetrafluoro-4-methylphenyl)boron, tris(2,3,4,6-tetorafluoro-5-methylphenyl)boron, tris(2,4,5-trifluoro-6-methylphenyl)boron, tris(2,3,6-trifluoro-4-methylphenyl)boron, tris(2,4,6-trifluoro-3-methylphenyl)boron, tris(2,6-difluoro-3-methylphenyl)boron, tris(2,4-difluoro-5-methylphenyl)boron, tris(3,5-difluoro-2-methylphenyl)boron, tris(4-methoxy-2,3,5,6-tetrafluorophenyl)boron, tris(3-methoxy-2,4,5,6-tetrafluorophenyl)boron, tris(2-methoxy-3,5,6-trifluorophenyl)boron, tris(3-methoxy-2,5,6-trifluorophenyl)boron, tris(3-methoxy-2,4,6-trifluorophenyl)boron, tris(2-methoxy-3,5-difluorophenyl)boron, tris(3-methoxy-2,6-difluorophenyl)boron, tris(3-methoxy-4,6-difluorophenyl)boron, tris(2-methoxy-4,6-difluorophenyl)boron, tris(4-methoxy-2,6-difluorophenyl) boron, and coordination compounds thereof, and further more preferably comprises tris(pentafluorophenyl)borane (TPB), or a coordination compound thereof.

In an embodiment, the fluorine atom-containing cationic polymerization initiator (A) preferably comprises at least one selected from the group consisting of a boron trifluoride compound and an aryl boron fluoride compound, more preferably comprises at least one selected from the group consisting of a boron trifluoride dimethyl ether complex ($BF_3 \cdot Me_2O$), a boron trifluoride diethyl ether complex ($BF_3 \cdot Et_2O$), a boron trifluoride dibutyl ether complex ($BF_3 \cdot Bu_2O$), and a boron trifluoride tetrahydrofuran complex ($BF_3 \cdot THF$), and at least one selected from the group consisting of tris(pentafluorophenyl)borane (TPB), bis(pentafluorophenyl)fluoroborane, pentafluorophenyldifluoroborane, tris(2,3,4,5-tetrafluorophenyl) boron, tris(2,3,4,6-tetrafluorophenyl)boron, tris(2,3,5,6-tetrafluorophenyl)boron, tris(2,3,5-trifluorophenyl)boron, tris(2,4,6-trifluorophenyl)boron, tris(1,3-difluorophenyl)boron, tris(2,3,5,6-tetrafluoro-4-methylphenyl)boron, tris(2,3,4,6-tetorafluoro-5-methylphenyl)boron, tris(2,4,5-trifluoro-6-methylphenyl)boron, tris(2,3,6-trifluoro-4-methylphenyl)boron, tris(2,4,6-trifluoro-3-methylphenyl)boron, tris(2,6-difluoro-3-methylphenyl)boron, tris(2,4-difluoro-5-methylphenyl)boron, tris(3,5-difluoro-2-methylphenyl)boron, tris(4-methoxy-2,3,5,6-tetrafluorophenyl)boron, tris(3-methoxy-2,4,5,6-tetrafluorophenyl)boron, tris(2-methoxy-3,5,6-trifluorophenyl)boron, tris(3-methoxy-2,5,6-trifluorophenyl)boron, tris(3-methoxy-2,4,6-trifluorophenyl)boron, tris(2-methoxy-3,5-difluorophenyl)boron, tris(3-methoxy-2,6-difluorophenyl)boron, tris(3-methoxy-4,6-difluorophenyl)boron, tris(2-methoxy-4,6-difluorophenyl) boron, tris(4-methoxy-2,6-difluorophenyl)boron, and coordination compounds thereof, and further more preferably comprises a boron trifluoride diethyl ether complex ($BF_3 \cdot Et_2O$) and tris(pentafluorophenyl)borane (TPB) or a coordination compound thereof.

The fluorine atom-containing cationic polymerization initiators (A) may be used alone, or used in combination of two or more thereof.

The content of the fluorine atom-containing cationic polymerization initiator (A) is preferably 0.1 to 20 mass, more preferably 0.5 to 15 mass%, further more preferably 1 to 10 mass%, and particularly preferably 5 to 10 mass%, with respect to the total mass of the cationic polymerization initiator composition. When two or more fluorine atom-containing cationic polymerization initiators (A) are comprised, the total content thereof is preferably within the above-described range.

In an embodiment, when the fluorine atom-containing cationic polymerization initiator (A) comprises a boron trifluoride compound, the content of the boron trifluoride compound is preferably 1 to 20 mass, more preferably 2 to 15 mass%, further more preferably 3 to 10 mass%, and particularly preferably 5 to 10 mass%, with respect to the total mass of

the cationic polymerization initiator composition.

In an embodiment, when the fluorine atom-containing cationic polymerization initiator (A) comprises an aryl boron fluoride compound, the content of the aryl boron fluoride compound is preferably 0.1 to 10 mass, more preferably 0.1 to 5 mass%, further more preferably 0.1 to 3 mass%, and particularly preferably 0.1 to 1 mass%, with respect to the total mass of the cationic polymerization initiator composition.

(2) Other polymerization initiators

The cationic polymerization initiator composition may comprise other polymerization initiators. As used herein, the term "other polymerization initiators" means cationic polymerization initiators other than the fluorine atom-containing cationic polymerization initiator (A), in other words, fluorine atom-free cationic polymerization initiators. By using the other polymerization initiator, the polymerization reaction can be controlled.

The other polymerization initiator is not limited, and examples thereof include fluorine atom-free Lewis acids, and fluorine atom-free protonic acids.

Examples of the fluorine atom-free Lewis acid include boron trichloride ($BCl_3$), aluminum chloride ($AlCl_3$), tin tetrachloride ($SnCl_4$), zinc chloride ($ZnCl_2$), iron chloride ($FeCl_3$), gallium chloride ($GaCl_3$), zirconium chloride ($ZrCl_4$), and niobium pentachloride ($NbCl_5$).

Examples of the fluorine atom-free protonic acid include perchloric acid ($HClO_4$), hydrogen chloride (HCl), sulfuric acid ($H_2SO_4$), trichloroacetic acid ($CCl_3COOH$), p-toluenesulfonic acid, phosphotungstic acid, and derivatives thereof.

Examples of the derivative of the fluorine atom-free protonic acid include perchloric anhydride, and peroxyacetyl perchloride.

The other polymerization initiators may be used alone, or used in combination of two or more thereof.

The content of the other polymerization initiator is preferably 0.1 to 20 mass, more preferably 0.1 to 15 mass%, and further more preferably 0.5 to 10 mass%, with respect to the total mass of the cationic polymerization initiator composition. When two or more other polymerization initiators are comprised, the total content thereof is preferably within the above-described range.

(3) Hydrophilic ether solvent (B) which does not have an acetal structure and an active hydroxyl group

The hydrophilic ether solvent (B) has a function to suppress generation of a metal corroding component such as hydrofluoric acid (HF) which can be generated by contact of the fluorine atom-containing cationic polymerization initiator (A) with water. Accordingly, corrosion of metal by metal corroding components can be prevented. In addition, inhibition of the polymerization reaction by metal components eluted due to corrosion of metal can be prevented, and as a result, it is possible to suppress deterioration of productivity of the oxymethylene copolymer, and deterioration of the physical properties of the oxymethylene copolymer obtained.

Examples of the hydrophilic ether solvent (B) include chain ether containing one oxygen atom, cyclic ether containing one oxygen atom, chain ether containing 2 or more oxygen atoms, and cyclic ether containing 2 or more oxygen atoms.

Examples of the chain ether containing one oxygen atom include dimethyl ether, diethyl ether, and ethyl methyl ether.

Examples of the cyclic ether containing an oxygen atom include four-membered cyclic ether containing one oxygen atom, such as oxetane, 2-methyloxetane, 3-methyloxetane, 2-ethyloxetane, 3-ethyloxetane, 2-propyloxetane, 2,2-dimethyloxetane, 3,3-dimethyloxetane, 2,3-dimethyloxetane and 2-ethyl-3-methyloxetane; five-membered cyclic ether containing one oxygen atom, such as tetrahydrofuran (THF), 2-methyltetrahydrofuran (MHF), 3-methyltetrahydrofuran, 2-ethyltetrahydrofuran, 3-ethyltetrahydrofuran, 2-propyltetrahydrofuran, 2,2-dimethyltetrahydrofuran, 3,3-dimethyltetrahydrofuran, 2,3-dimethyltetrahydrofuran, 2,4-dimethyltetrahydrofuran, 2-ethyl-3-methyltetrahydrofuran and 2-ethyl-4-methyltetrahydrofuran; and six-membered cyclic ether containing one oxygen atom, such as tetrahydropyran, 2-methyltetrahydropyran, 3-methyltetrahydropyran, 4-methyltetrahydropyran (MTHP), 2-ethyltetrahydropyran, 3-ethyltetrahydropyran, 4-ethyltetrahydropyran, 2-propyltetrahydropyran, 2,2-dimethyltetrahydropyran, 3,3-dimethyltetrahydropyran, 4,4-dimethyltetrahydropyran, 2,3-dimethyltetrahydropyran, 2,5-dimethyltetrahydropyran and 2-ethyl-5-methyltetrahydropyran.

Examples of the chain ether containing 2 or more oxygen atoms include chain ether containing 2 oxygen atoms, such as dimethoxymethane (methylal), diethoxymethane, dipropyloxymethane, diisopropyloxymethane, dibutoxymethane, 1,2-dimethoxyethane (DME), 1,2-diethoxyethane, 1,3-dimethoxypropane and 1,3-diethoxypropane; chain ether containing 3 oxygen atoms, such as trimethyl orthoformate (methoxymethylal), triethyl orthoformate, triisopropyl orthoformate, diethylene glycol dimethyl ether, diethylene glycol diethyl ether and diethylene glycol dibutyl ether; and chain ether containing 4 or more oxygen atoms, such as triethylene glycol dimethyl ether, triethylene glycol diethyl ether,

polyethylene glycol dimethyl ether and polyethylene glycol diethyl ether.

Examples of the cyclic ether containing 2 or more oxygen atoms include cyclic ether containing 2 oxygen atoms, such as 1,4-dioxane, 2-methyl-1,3-dioxane and 4-methyl-1,3-dioxane; and cyclic ether containing 3 or more oxygen atoms, such as 12-Crown-4, 15-Crown-5, 18-Crown-6, dibenzo-18-Crown-6.

In an embodiment, the hydrophilic ether solvent (B) preferably comprises at least one of chain ether containing 2 or more oxygen atoms and cyclic ether containing 2 or more oxygen atoms, more preferably comprises at least one of chain ether containing 2 oxygen atoms and cyclic ether containing 2 oxygen atoms, further more preferably comprises at least one selected from the group consisting of dimethoxymethane, diethoxymethane, 1,2-dimethoxyethane (DME), 1,2-diethoxyethane, and 1,4-dioxane, and particularly preferably comprises at least one selected from the group consisting of 1,2-dimethoxyethane (DME), 1,2-diethoxyethane, and 1,4-dioxane.

In an embodiment, the hydrophilic ether solvent (B) preferably comprises at least one of chain ether containing one oxygen atom and cyclic ether containing one oxygen atom, more preferably comprises cyclic ether containing one oxygen atom, further more preferably comprises at least one of four-membered cyclic ether containing one oxygen atom and five-membered cyclic ether containing one oxygen atom, particularly preferably comprises five-membered cyclic ether containing one oxygen atom, and most preferably comprises at least one selected from the group consisting of tetrahydrofuran (THF), 2-methyltetrahydrofuran (MHF), 3-methyltetrahydrofuran, 2-ethyltetrahydrofuran, and 3-ethyltetrahydrofuran.

The hydrophilic ether solvents (B) may be used alone, or used in two or more combinations thereof.

The content of the hydrophilic ether solvent (B) is 2.5 mass% or more, preferably 2.5 to 99 mass, more preferably 2.5 to 60 mass%, even more preferably 2.5 to 40 mass%, particularly preferably 20 to 20 mass%, and most preferably 2.5 to 8 mass%, with respect to the total mass of the cationic polymerization initiator composition. When two or more hydrophilic ether solvents (B) are comprised, the total content thereof is preferably within the above-described range.

In an embodiment, when the hydrophilic ether solvent (B) comprises at least one of chain ether containing 2 or more oxygen atoms and cyclic ether containing 2 or more oxygen atoms, the content of the hydrophilic ether solvent (B) is preferably 2.5 to 60 mass%, more preferably 2.5 to 20 mass%, and further more preferably 2.5 to 8 mass%, with respect to the total mass of the cationic polymerization initiator composition.

In an embodiment, when the hydrophilic ether solvent (B) comprises at least one of chain ether containing one oxygen atom and cyclic ether containing one oxygen atom, the content of the hydrophilic ether solvent (B) is preferably 2.5 to 20 mass%, more preferably 2.5 to 8 mass%, and further more preferably 2.5 to 5 mass%, with respect to the total mass of the cationic polymerization initiator composition.

(4) Other solvents

The cationic polymerization initiator composition may comprise other solvents. As used herein, the term "other solvents" means solvents other than the hydrophilic ether solvent (B) which does not have an acetal structure and an active hydroxyl group. By using the other solvent, the polymerization reaction can be controlled.

Examples of the other solvent include, but are not limited to, aliphatic hydrocarbons such as hexane, heptane and cyclohexane; and aromatic hydrocarbons such as benzene, toluene and xylene. These other solvents may be used alone, or used in combination of two or more thereof.

The content of the other solvent is preferably 1 to 95 mass%, more preferably 10 to 95 mass%, further more preferably 40 to 95 mass%, particularly preferably 70 to 95 mass%, and most preferably 85 to 95 mass%, with respect to the total mass of the cationic polymerization initiator composition. When two or more other solvents are comprised, the total content thereof is preferably within the above-described range.

(5) Water

The cationic polymerization initiator composition can comprise water.

The water is typically derived from water existing in the air, and water derived from components comprised in the cationic polymerization initiator composition (for example, water derived from tris(pentafluorophenyl)borane (TPB) trihydrate). In addition, the water may be water that is intendedly added as necessary.

The content of the water is preferably 1,500 ppm or less, more preferably 10 to 1,000 ppm, and further more preferably 50 to 750 ppm, with respect to the total mass of the cationic polymerization initiator composition.

2. Method for producing oxymethylene copolymer

According to an embodiment of the present invention, a method for producing an oxymethylene copolymer is provided. The method for producing an oxymethylene copolymer comprises a polymerization step of preparing an oxymethylene polymer from a reaction solution which comprises a polymerization raw material (C) containing 1,3,5-trioxane, and the cationic polymerization initiator composition. In addition, the method may further comprise a stabilization step, an additive addition step and the like as necessary.

(1) Polymerization step

The polymerization step is a step of preparing an oxymethylene polymer from a reaction solution which comprises the polymerization raw material (C) containing 1,3,5-trioxane (hereinafter, also referred to simply as "trioxane"), and the cationic polymerization initiator composition.

<Reaction solution>

The reaction solution comprises the polymerization raw material (C), and the cationic polymerization initiator composition.

[Polymerization raw material (C)]

The polymerization raw material (C) comprises trioxane. The polymerization raw material (C) may further comprise a comonomer, a chain transfer agent, and the like.

(Trioxane)

The trioxane forms oxymethylene units ($[-CH_2O-]_n$) of the oxymethylene copolymer by undergoing ring-opening polymerization during the polymerization reaction.

The content of the trioxane is preferably 80.0 to 99.9 mass%, and more preferably 90.0 to 99.5 mass%, with respect to the total mass of the polymerization raw material (C).

(Comonomer)

The comonomer is a monomer other than trioxane, which can copolymerize with trioxane. The comonomer improves the heat stability of the oxymethylene copolymer. The comonomer exists as a non-crystalline component in the oxymethylene copolymer.

The comonomer is not limited, and examples thereof include comonomers from which oxyethylene units are derived, such as 1,3-dioxolane, 2-ethyl-1,3-dioxolane, 2-propyl-1,3-dioxolane, 2-butyl-1,3-dioxolane, 2,2-dimethyl-1,3-dioxolane, 2-phenyl-2-methyl-1,3-dioxolane, 4-methyl-1,3-dioxolane, 2,4-dimethyl-1,3-dioxolane, 2-ethyl-4-methyl-1,3-dioxolane, 4,4-dimethyl-1,3-dioxolane, 4,5-dimethyl-1,3-dioxolane, 2,2,4-trimethyl-1,3-dioxolane, 4-hydroxymethyl-1,3-dioxolane, 4-butyloxymethyl-1,3-dioxolane, 4-phenoxymethyl-1,3-dioxolane, 4-chloromethyl-1,3-dioxolane, ethylene oxide, propylene oxide, butylene oxide, styrene oxide, epichlorohydrin, epibromohydrin, glycidyl methyl ether, ethyl glycidyl ether, butyl glycidyl ether and phenyl glycidyl ether; and cyclic formals of any of the comonomers from which oxyethylene units are derived. These comonomers may be used alone, or used in combination of two or more thereof.

From the viewpoint of excellent heat stability and crystallinity, the comonomer preferably includes, among those mentioned above, comonomers from which oxyethylene units are derived, more preferably includes 1,3-dioxolane and/or ethylene oxide, and further more preferably includes 1,3-dioxolane.

The content of the comonomer is preferably 0.1 to 20 mass%, and more preferably 0.5 to 10 mass%, with respect to the total mass of the polymerization raw material (C).

(Chain transfer agent)

The chain transfer agent has a function to adjust the molecular weight of the oxymethylene copolymer.

The chain transfer agent is not limited, and examples thereof include protonic compounds such as water, formic acid, methanol, formaldehyde, phenol and 2,6-dimethylphenol; and ether compounds such as dimethoxymethane (methylal), trimethyl orthoformate (methoxymethylal) and dibutoxymethane. These chain transfer agents may be used alone, or used in combination of two or more thereof.

The chain transfer agent preferably includes, among those mentioned above, ether compounds, and more preferably includes methylal because an end of the oxymethylene copolymer obtained is end-capped with a stable methoxy group ($-OCH_3$).

The chain transfer agent may be derived from the process for producing trioxane, or may be separately added, but is preferably separately added. Examples of the chain transfer agent derived from the process for producing trioxane include water, formic acid, methanol, and formaldehyde. These chain transfer agents derived from the process for

producing trioxane are preferably removed before the copolymerization reaction by purifying trioxane by distillation or the like.

[Cationic polymerization initiator composition]

As the cationic polymerization initiator composition, those described above are used.

[Composition of reaction solution]

The composition of the reaction solution can be set according to reaction conditions, desired physical properties of an oxymethylene copolymer, and the like.

The content of the comonomer in the reaction solution is preferably 0.01 to 10 parts by mass, more preferably 0.1 to 7.5 parts by mass, further more preferably 0.1 to 5.0 parts by mass, and particularly preferably 0.3 to 1.0 parts by mass, per 100 parts by mass of trioxane.

The content of the comonomer in the reaction solution is preferably 0.001 to 1 mol, more preferably 0.001 to 0.1 mol, further more preferably 0.001 to 0.05 mol, and particularly preferably 0.003 to 0.01 mol, per 1 mol of trioxane.

The content of the fluorine atom-containing cationic polymerization initiator (A) in the reaction solution is preferably 10 to 100 ppm, more preferably 20 to 80 ppm, and further more preferably 30 to 60 ppm, with respect to trioxane.

The content of the fluorine atom-containing cationic polymerization initiator (A) in the reaction solution is preferably 0.00001 to 1 mmol, more preferably 0.001 to 0.5 mmol, further more preferably 0.005 to 0.1 mmol, and further more preferably 0.01 to 0.05 mmol, per 1 mol of trioxane.

The content of the other polymerization initiator in the reaction solution is preferably 10 to 100 ppm, more preferably 20 to 80 ppm, and further more preferably 30 to 60 ppm, with respect to trioxane.

The content of the other polymerization initiator in the reaction solution is preferably 0.00001 to 1 mmol, more preferably 0.001 to 0.5 mmol, further more preferably 0.005 to 0.1 mmol, and further more preferably 0.01 to 0.05 mmol, per 1 mol of trioxane.

The content of the hydrophilic ether solvent (B) in the reaction solution is preferably 18 ppm or more, more preferably 18 to 1,000 ppm, further more preferably 18 to 300 ppm, particularly preferably 18 to 100 ppm, and most preferably 18 to 50 ppm, with respect to trioxane.

The content of the other solvent in the reaction solution is preferably 10 to 1,500 ppm, more preferably 100 to 1,000 ppm, further more preferably 300 to 900 ppm, and particularly preferably 600 to 800 ppm, per 1 mol of trioxane.

The reaction solution is prepared by mixing the polymerization raw material (C) and the cationic polymerization initiator composition. However, components (comonomer, chain transfer agent and the like) can be appropriately added to the reaction solution on the basis of, for example, the composition of the polymerization raw material (C) and the cationic polymerization initiator composition. For example, if the total value of the contents of the chain transfer agent in the polymerization raw material (C) and the cationic polymerization initiator composition is smaller than the set value, the content of the chain transfer agent in the reaction solution can be adjusted by adding the chain transfer agent to the reaction solution.

<Production of oxyethylene copolymer>

In the polymerization step, an oxymethylene polymer is obtained from the reaction solution. Specifically, trioxane and the comonomer are copolymerized in the presence of the fluorine atom-containing cationic polymerization initiator (A) and the hydrophilic ether solvent (B).

The reaction temperature of copolymerization is preferably 50 to 150°C, and more preferably 60 to 120°C.

The reaction time of copolymerization is preferably 0.1 to 60 minutes, and more preferably 1 to 30 minutes.

The copolymerization is preferably followed by termination of the copolymerization reaction by adding a polymerization terminator to deactivate the fluorine atom-containing cationic polymerization initiator (A) and/or a cationically active species.

The polymerization terminator is not limited, and examples thereof include triphenylphosphine; ammonia; amine such as diethylamine, triethylamine and tributylamine; and ethanolamine such as triethanolamine, N-methyldiethanolamine, N,N-diethylhydroxylamine, N-isopropylhydroxylamine, N,N-bis-octadecylhydroxylamine and N,N-dibenzylhydroxylamine. These polymerization terminators may be used alone, or used in combination of two or more thereof.

The amount of the polymerization terminator added is not limited as long as it is an amount sufficient to deactivate the fluorine atom-containing cationic polymerization initiator (A), but the molar ratio of the polymerization terminator used with respect to the amount of the fluorine atom-containing cationic polymerization initiator (A) added (amount of polymerization terminator added/amount of fluorine atom-containing cationic polymerization initiator (A) added) is typically in the range of $1.0 \times 10^{-1}$ to $1.0 \times 10^{1}$.

The POM content ratio which is related to the copolymerization reaction yield is preferably 80% or more, more preferably 90% or more, further more preferably 96% or more, particularly preferably 97% or more, and most preferably 97.5% or more. The upper limit value of the POM content ratio is 100%. As used herein, the "POM content ratio" is measured by the method described in Examples.

(2) End stabilization step

In an embodiment, the polymerization step may be followed by an end stabilization step. The end stabilization step is a step of performing end stabilization on the oxymethylene copolymer.

<End stabilization>

The oxymethylene copolymer obtained can have an unstable moiety ($-(CH_2O)_n-H$) at an end thereof. By performing end stabilization, the unstable moiety can be depolymerized and converted into a stable end ($-CH_2CH_2OH$).

The method of end stabilization is not limited, but is preferably a method in which the oxymethylene copolymer is melted, and heated. The end stabilization is typically performed by melting and kneading with an extruder. Here, the end stabilization is preferably performed in the presence of at least one selected from the group consisting of an end stabilizer, an inorganic particle, an antioxidant, and a scavenger.

[End stabilizer]

The end stabilizer has a function to improve the decomposition rate of the unstable moiety in the oxymethylene copolymer.

The end stabilizer is not limited, and examples thereof include ammonia; amine such as trimethylamine, triethylamine and tributylamine; and hydroxide salts, hydroacid salts (hydrochloric acid salts, hydrobromic acid salts and the like), oxoacid salts (sulfuric acid salts, nitric acid salts, carbonic acid salts and the like), and carboxylic acid salts (formic acid salts, acetic acid salts, propionic acid salts, benzoic acid salts, oxalic acid salts and the like) of quaternary ammonium such as tetramethylammonium, tetraethylammonium, ethyltrimethylammonium, trimethyl(2-hydroxyethyl) ammonium, triethyl(2-hydroxyethyl)ammonium, tripropyl(2-hydroxyethyl)ammonium, benzyltrimethylammonium, benzyltriethylammonium, and benzyltripropylammonium. These end stabilizers may be used alone, or used in combination of two or more thereof.

The end stabilizer preferably includes, among those mentioned above, hydroxide salts of quaternary ammonium, and more preferably includes at least one of hydroxide salts of tetramethylammonium, tetraethylammonium, ethyltrimethylammonium, trimethyl(2-hydroxyethyl)ammonium, triethyl(2-hydroxyethyl)ammonium, tripropyl(2-hydroxyethyl) ammonium, benzyltrimethylammonium, benzyltriethylammonium, and benzyltripropylammonium.

The amount of the end stabilizer added is preferably 0.01 to 10 parts by mass, and more preferably 0.05 to 5 parts by mass, per 100 parts by mass of the oxymethylene copolymer.

[Inorganic particle]

The inorganic particle has a function to improve the heat stability of the oxymethylene copolymer obtained, and the like.

The inorganic particle is not limited, and examples thereof include particles of talc, mica, wollastonite, silica, layered double hydroxide, calcium carbonate, magnesium hydroxide, and calcium hydroxide. These inorganic particles may be used alone, or used in combination of two or more thereof.

The inorganic particle preferably includes, among those mentioned above, at least one selected from the group consisting of talc, mica and layered double hydroxide, and more preferably includes layered double hydroxide.

The amount of the inorganic particles added is preferably 0.0001 to 1 parts by mass, more preferably 0.005 to 0.5 parts by mass, and further more preferably 0.01 to 0.2 by mass, per 100 parts by mass of the oxymethylene copolymer.

[Antioxidant]

The antioxidant has a function to prevent oxidation of the oxymethylene copolymer obtained.

The antioxidant is not limited, and examples thereof include hindered phenol. Examples of the hindered phenol include n-octadecyl-3-(3',5'-di-t-butyl-4'-hydroxyphenyl)propionate, n-octadecyl-3-(3'-methyl-5'-t-butyl-4'-hydroxyphenyl)propionate, n-tetradecyl-3-(3',5'-di-t-butyl-4'-hydroxyphenyl)propionate, 1,6-hexanediol-bis[3-(3,5-di-t-butyl-4-hydroxyphenyl)propionate], 1,4-butanediol-bis[3-(3,5-di-t-butyl-4-hydroxyphenyl)propionate], triethylene glycol-bis[3-(3-t-butyl-5-methyl-4-hydroxyphenyl)propionate], tetrakis[methylene-3-(3'-t-butyl-4-hydroxyphenyl)propionate]methane,

and N,N'-bis[3-(3,5-di-t-butyl-4-hydroxyphenyl)propionyl] hydrazine. These antioxidants may be used alone, or used in combination of two or more thereof.

The antioxidant preferably includes, among those mentioned above, triethylene glycol-bis[3-(3-t-butyl-5-methyl-4-hydroxyphenyl)propionate].

The amount of the antioxidant added is preferably 0.0001 to 1 parts by mass, more preferably 0.001 to 5 parts by mass, and further more preferably 0.003 to 3 by mass, per 100 parts by mass of the oxymethylene copolymer.

[Scavenger]

The scavenger has a function to trap formic acid and/or formaldehyde generated by decomposition or the like of at least a part of the oxymethylene copolymer.

The scavenger is not limited, and examples thereof include polyamide resins such as nylon 6, nylon 11, nylon 12, nylon 66, nylon 610, nylon 6T and nylon 612; amide compounds such as stearylstearic acid amide, stearyloleic acid amide, stearylerucic acid amide, ethylenediamine-distearic acid amide and ethylenediamine-dibehenic acid amide; urea compounds such as urea, N-phenylurea, N,N'-diphenylurea, N-phenylthiourea and N,N'-diphenylthiourea; and triazine compounds such as melamine, benzoguanamine, N-phenylmelamine, melam, N,N'-diphenylmelamine, N-methylolmelamine, N,N'-trimethylolmelamine and 2,4-diamino-6-cyclohexyltriazine. These scavengers may be used alone, or used in combination of two or more thereof.

The scavenger preferably includes, among those mentioned above, urea compounds and/or triazine compounds, more preferably includes triazine compounds, and further more preferably includes melamine.

The amount of the scavenger added is preferably 0.0001 to 10 parts by mass, more preferably 0.001 to 5 parts by mass, and further more preferably 0.003 to 3 by mass, per 100 parts by mass of the oxymethylene copolymer.

[Conditions of end stabilization]

The temperature of end stabilization is not limited, but is preferably 260°C or lower, and more preferably 240°C or lower. The lower limit of the temperature of end stabilization is not limited as long as it is equal to or higher than the melting point of oxymethylene copolymer, but is preferably 150°C or higher, more preferably 180°C or higher, and further more preferably 200°C or higher. In an embodiment, the temperature of end stabilization is preferably 150 to 260°C, more preferably 180 to 260°C, and further more preferably 200 to 240°C.

The time of end stabilization is not limited, but is preferably 1 minute to 3 hours, more preferably 2 minutes to 1 hour, and further more preferably 3 minutes to 30 minutes.

The end stabilization may be performed under reduced pressure. Here, the pressure of end stabilization is not limited, but is preferably 10 to 100 KPa, more preferably 10 to 80 KPa, and further more preferably 10 to 50 KPa.

(3) Additive addition step

In an embodiment, the polymerization step or the end stabilization step may be followed by an additive addition step. The additive addition step is a step of adding additives to the oxymethylene copolymer.

The additive is not limited, and examples thereof include the stabilizers, inorganic particles and antioxidants described above, and colorants, plasticizers, mold release agents, fluorescent whitening agents, and antistatic agents.

By adding additives to the oxymethylene copolymer, the physical properties can be adjusted.

3. Method for producing molded article

According to an embodiment of the present invention, a method for producing a molded article is provided. The method for producing a molded article comprises molding an oxymethylene copolymer produced by the above-described method.

Since the oxymethylene copolymer produced by the above-described method has high physical properties, a molded article molded using the oxymethylene copolymer also has high physical properties. The molded article can be suitably used for fibers, films, gears and bears, and the like with high-performance and high-functionality.

Examples

Hereinafter, the present invention will be described in detail by giving Examples, but the present invention is not limited thereto.

[Example 1]

A boron trifluoride diethyl ether complex ($BF_3 \cdot Et_2O$) as a fluorine atom-containing cationic polymerization initiator (A), 1,2-dimethoxyethane (DME) as a hydrophilic ether solvent (B) which does not have an acetal structure and an active hydroxyl group, and benzene as the other solvent were mixed at 7.1 mass%, 3 mass% and 89.9 mass%, respectively, to produce a cationic polymerization initiator composition.

The content of water comprised in the cationic polymerization initiator composition was 288 ppm as measured with a Karl Fischer water analyzer.

[Example 2]

A cationic polymerization initiator composition was produced in the same manner as in Example 1 except that the content of DME was changed to 25 mass%, and the content of benzene was changed to 67.9 mass%.

The content of water comprised in the cationic polymerization initiator composition was 327 ppm as measured in the same manner as in Example 1.

[Example 3]

A cationic polymerization initiator composition was produced in the same manner as in Example 1 except that the content of DME was changed to 92.9 mass%, and the content of benzene was changed to 0 mass%.

The content of water comprised in the cationic polymerization initiator composition was 332 ppm as measured in the same manner as in Example 1.

[Example 4]

A cationic polymerization initiator composition was produced in the same manner as in Example 1 except that 1,4-dioxane (DOX) was used instead of DME.

The content of water comprised in the cationic polymerization initiator composition was 326 ppm as measured in the same manner as in Example 1.

[Example 5]

A cationic polymerization initiator composition was produced in the same manner as in Example 4 except that the content of DOX was changed to 25 mass%, and the content of benzene was changed to 67.9 mass%.

The content of water comprised in the cationic polymerization initiator composition was 340 ppm as measured in the same manner as in Example 1.

[Example 6]

A cationic polymerization initiator composition was produced in the same manner as in Example 4 except that the content of DOX was changed to 92.9 mass%, and the content of benzene was changed to 0 mass%.

The content of water comprised in the cationic polymerization initiator composition was 348 ppm as measured in the same manner as in Example 1.

[Example 7]

A cationic polymerization initiator composition was produced in the same manner as in Example 1 except that tetrahydrofuran (THF) was used instead of DME.

The content of water comprised in the cationic polymerization initiator composition was 306 ppm as measured in the same manner as in Example 1.

[Example 8]

A cationic polymerization initiator composition was produced in the same manner as in Example 7 except that the content of THF was changed to 10 mass%, and the content of benzene was changed to 82.9 mass%.

The content of water comprised in the cationic polymerization initiator composition was 327 ppm as measured in the same manner as in Example 1.

[Example 9]

A cationic polymerization initiator composition was produced in the same manner as in Example 7 except that the content of THF was changed to 25 mass%, and the content of benzene was changed to 67.9 mass%.
The content of water comprised in the cationic polymerization initiator composition was 351 ppm as measured in the same manner as in Example 1.

[Example 10]

A cationic polymerization initiator composition was produced in the same manner as in Example 1 except that tris(pentafluorophenyl)borane trihydrate (TPB·3$H_2O$) as a fluorine atom-containing cationic polymerization initiator (A) was added at 0.3 mass%, and the content of benzene was changed to 89.6 mass%.
The content of water comprised in the cationic polymerization initiator composition was 642 ppm as measured in the same manner as in Example 1.

[Example 11]

A cationic polymerization initiator composition was produced in the same manner as in Example 10 except that the content of DME was changed to 10 mass%, and the content of benzene was changed to 82.6 mass%.
The content of water comprised in the cationic polymerization initiator composition was 659 ppm as measured in the same manner as in Example 1.

[Example 12]

A cationic polymerization initiator composition was produced in the same manner as in Example 10 except that the content of DME was changed to 92.6 mass%, and the content of benzene was changed to 0 mass%.
The content of water comprised in the cationic polymerization initiator composition was 662 ppm as measured in the same manner as in Example 1.

[Comparative Example 1]

A cationic polymerization initiator composition was produced in the same manner as in Example 1 except that the content of DME was changed to 0 mass%, and the content of benzene was changed to 92.9 mass%.
The content of water comprised in the cationic polymerization initiator composition was 276 ppm as measured in the same manner as in Example 1.

[Comparative Example 2]

A cationic polymerization initiator composition was produced in the same manner as in Example 1 except that the content of DME was changed to 2.2 mass%, and the content of benzene was changed to 90.7 mass%.
The content of water comprised in the cationic polymerization initiator composition was 291 ppm as measured in the same manner as in Example 1.

[Comparative Example 3]

A cationic polymerization initiator composition was produced in the same manner as in Example 1 except that TPB·3$H_2O$ was added at 0.3 mass%, the content of DME was changed to 0 mass%, and the content of benzene was changed to 92.6 mass%.
The content of water comprised in the cationic polymerization initiator composition was 619 ppm as measured in the same manner as in Example 1.

[Comparative Example 4]

A cationic polymerization initiator composition was produced in the same manner as in Example 1 except that TPB·3$H_2O$ was added at 0.3 mass%, the content of DME was changed to 2.2 mass%, and the content of benzene was changed to 90.4 mass%.
The content of water comprised in the cationic polymerization initiator composition was 595 ppm as measured in the same manner as in Example 1.

Table 1 below shows the cationic polymerization initiator compositions produced in Examples 1 to 12 and Comparative Examples 1 to 4.

[Table 1]

| | Fluorine atom-containing cationic polymerization initiator (A) | | Hydrophilic ether solvent (B) | | Benzene | Water | Total |
|---|---|---|---|---|---|---|---|
| | $BF_3 \cdot EtO_2$ | $TPB \cdot 3H_2O$ | Type | Content (mass%) | Content (mass%) | Content (ppm) | |
| | Content (mass%) | Content (mass%) | | | | | |
| Example 1 | 7.1 | 0 | DME | 3 | 89.9 | 288 | 100 |
| Example 2 | 7.1 | 0 | DME | 25 | 67.9 | 327 | 100 |
| Example 3 | 7.1 | 0 | DME | 92.9 | 0 | 332 | 100 |
| Example 4 | 7.1 | 0 | DOX | 3 | 89.9 | 326 | 100 |
| Example 5 | 7.1 | 0 | DOX | 25 | 67.9 | 340 | 100 |
| Example 6 | 7.1 | 0 | DOX | 92.9 | 0 | 348 | 100 |
| Example 7 | 7.1 | 0 | THF | 3 | 89.9 | 306 | 100 |
| Example 8 | 7.1 | 0 | THF | 10 | 82.9 | 327 | 100 |
| Example 9 | 7.1 | 0 | THF | 25 | 67.9 | 351 | 100 |
| Example 10 | 7.1 | 0.3 | DME | 3 | 89.6 | 642 | 100 |
| Example 11 | 7.1 | 0.3 | DME | 10 | 82.6 | 659 | 100 |
| Example 12 | 7.1 | 0.3 | DME | 92.6 | 0 | 662 | 100 |
| Comparative Example 1 | 7.1 | 0 | - | 0 | 92.9 | 276 | 100 |
| Comparative Example 2 | 7.1 | 0 | DME | 2.2 | 90.7 | 291 | 100 |
| Comparative Example 3 | 7.1 | 0.3 | - | 0 | 92.6 | 619 | 100 |
| Comparative Example 4 | 7.1 | 0.3 | DME | 2.2 | 90.4 | 595 | 100 |

The structural formulae of dimethoxyethane (DME), 1,4-dioxane (DOX) and tetrahydrofuran (THF) which are hydrophilic ether solvents (B) are shown below.

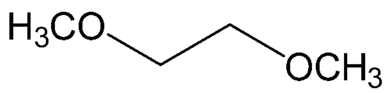

DME

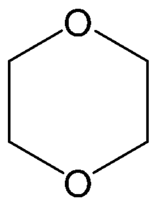

DOX

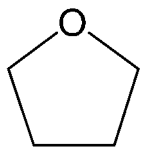

THF

[Evaluation]

Evaluation of the metal corroding property, and the POM content ratio and the melt mass flow rate (MFR) of an oxymethylene copolymer produced was performed on the cationic polymerization initiator compositions produced in Examples 1 to 12 and Comparative Examples 1 to 4. Hereinafter, the oxymethylene copolymer before end stabilization may be referred to distinctively as a "crude oxymethylene copolymer".

(Metal corroding property)

Double side welding was performed on two SUS 304 (Cr-Ni-type austinite-based stainless steel) flat plates of 20

mm in width, 30 mm in length and 1.5 mm in thickness with a SUS 304 welding rod such that the short sides (20 mm) of the flat plates were combined, and buff treatment was applied to both surfaces. The SUS flat plate obtained by the welding and buff treatment was degreased with acetone, and dried to obtain a "test piece before metal corroding property test".

A 100 mL screw-top bottle was charged with the test piece and 100 mL of the cationic polymerization initiator composition, tightly capped, and left standing in a dark place at 23°C. After 40 days, the test piece was taken out from the cationic polymerization initiator composition, and the test piece was washed with acetone, and dried to obtain a "test piece after metal corroding property test".

The weight loss ratio (%) of the test piece was calculated by the following expression.

$$\text{Weight loss ratio (\%)} = (W1 - W2)/(W1) \times 100$$

Here, W1 is a weight (g) of the "test piece before metal corroding property test", and W2 is a weight (g) of the "test piece after metal corroding property test".

The metal corroding property of the cationic polymerization initiator composition was evaluated on the basis of the following criteria. Table 3 below shows the obtained results.

◦: The weight loss ratio is 0.02% or less.
×: The weight loss ratio is more than 0.02%.

The cationic polymerization initiator composition from which the test piece after metal corroding property test had been taken out was collected separately. Hereinafter, the cationic polymerization initiator composition after metal corroding property test is also referred to as a "cationic polymerization initiator composition (after metal corroding property test)". The cationic polymerization initiator composition before metal corroding property test is also referred to as a "cationic polymerization initiator composition (before metal corroding property test)".

(Crude oxymethylene copolymer (POM) content ratio)

(1) POM content ratio of cationic polymerization initiator composition (before metal corroding property test)

A jacketed batch-type reactor (volume 5 L) warmed by running water at 65°C through the jacket was charged with 1,200 g of 1,3,5-trioxane (TOX), 48 g of 1,3-dioxolane as a comonomer, and methylal as a chain transfer agent at 300 ppm with respect to the 1,3,5-trioxane. Subsequently, the cationic polymerization initiator composition (before metal corroding property test) was injected while the contents were mixed by stirring with a stirring impeller rotated at 60 rpm, thereby starting a polymerization reaction. Fifteen minutes after the start of the polymerization reaction, the stirring impeller of the batch-type reactor was stopped, and a crude oxymethylene copolymer was obtained as a reaction product.

Table 2 below shows conditions of the polymerization reaction. In Table 2, "ppm-TOX" means the amount of each component added (ppm) with respect to the amount of 1,3,5-trioxane added. In addition, "mmol/mol-TOX" means the amount of each component added (mmol) with respect to the amount of 1,3,5-trioxane added (1 mol).

[Table 2]

| | Fluorine atom-containing cationic polymerization initiator (A) | | | | Hydrophilic ether solvent (B) | | Benzene | Methylal |
|---|---|---|---|---|---|---|---|---|
| | $BF_3 \cdot EtO_2$ | | $TPB \cdot 3H_2O$ | | Type | ppm-TOX | ppm-TOX | ppm-TOX |
| | ppm-TOX | mmol/mol-TOX | ppm-TOX | mmol/mol-TOX | | | | |
| Example 1 | 54.9 | 0.035 | 0 | 0 | DME | 23.2 | 695.5 | 300 |
| Example 2 | 54.9 | 0.035 | 0 | 0 | DME | 193.4 | 525.3 | 300 |
| Example 3 | 54.9 | 0.035 | 0 | 0 | DME | 718.7 | 0 | 300 |
| Example 4 | 54.9 | 0.035 | 0 | 0 | DOX | 23.2 | 695.5 | 300 |
| Example 5 | 54.9 | 0.035 | 0 | 0 | DOX | 193.4 | 525.3 | 300 |
| Example 6 | 54.9 | 0.035 | 0 | 0 | DOX | 718.7 | 0 | 300 |
| Example 7 | 54.9 | 0.035 | 0 | 0 | THF | 23.2 | 695.5 | 300 |
| Example 8 | 54.9 | 0.035 | 0 | 0 | THF | 77.4 | 641.3 | 300 |

(continued)

| | Fluorine atom-containing cationic polymerization initiator (A) | | | | Hydrophilic ether solvent (B) | | Benzene | Methylal |
|---|---|---|---|---|---|---|---|---|
| | $BF_3 \cdot EtO_2$ | | $TPB \cdot 3H_2O$ | | Type | ppm-TOX | ppm-TOX | ppm-TOX |
| | ppm-TOX | mmol/mol-TOX | ppm-TOX | mmol/mol-TOX | | | | |
| Example 9 | 54.9 | 0.035 | 0 | 0 | THF | 193.4 | 525.3 | 300 |
| Example 10 | 47.1 | 0.030 | 1.9 | 0.0003 | DME | 19.9 | 594.3 | 300 |
| Example 11 | 47.1 | 0.030 | 1.9 | 0.0003 | DME | 66.3 | 547.9 | 300 |
| Example 12 | 47.1 | 0.030 | 1.9 | 0.0003 | DME | 614 | 0 | 300 |
| Comparative Example 1 | 54.9 | 0.035 | 0 | 0 | - | 0 | 718.7 | 300 |
| Comparative Example 2 | 54.9 | 0.035 | 0 | 0 | DME | 17.0 | 701.7 | 300 |
| Comparative Example 3 | 47.1 | 0.030 | 1.9 | 0.0003 | - | 0 | 614.2 | 300 |
| Comparative Example 4 | 47.1 | 0.030 | 1.9 | 0.0003 | DME | 14.6 | 599.6 | 300 |

A part of the coarse particle-shaped crude oxymethylene copolymer was collected from the reactor after the polymerization reaction. Subsequently, the collected coarse particle-shaped oxymethylene copolymer was washed twice with acetone, then pulverized with a sample mill, and dried under vacuum with a vacuum dryer at 60°C for 2 hours. In this way, acetone and remaining unreacted monomers were removed.

The content ratio (mass%) of the crude oxymethylene copolymer (POM) comprised in the coarse particle-shaped crude oxymethylene copolymer was calculated by the following expression.

$$\text{POM content ratio (mass\%)} = (B/A) \times 100$$

Here, A is a mass (g) of the crude oxymethylene copolymer before removal of unreacted monomers, and B is a mass (g) of the crude oxymethylene copolymer after removal of unreacted monomers.

The POM content ratio was evaluated on the basis of the following criteria. The higher the POM content ratio is, the smaller the amount of unreacted monomers is, and the more sufficiently the polymerization reaction proceeded. Table 3 below shows the obtained results.

◎: The POM content ratio is 97.5 mass% or more.
◦: The POM content ratio is 97 mass% or more and less than 97.5 mass%.
△: The POM content ratio is 96 mass% or more and less than 97 mass%.
×: The POM content ratio is less than 96 mass%.

(2) POM content ratio of cationic polymerization initiator composition (after metal corroding property test)

The POM content ratio was similarly evaluated using the cationic polymerization initiator composition (after metal corroding property test) instead of the cationic polymerization initiator composition (before metal corroding property test). Table 3 below shows the obtained results.

(3) Assessment of change ratio in POM content ratio

The change ratio (%) in POM content ratio was calculated by the following expression.

Change ratio (%) = (POM content ratio after metal corroding property test - POM content ratio before metal corroding property test)/(POM content ratio before metal corroding property test) × 100

The change ratio was evaluated on the basis of the following criteria. The lower the change ratio (the smaller the magnitude of the negative value), the lesser the degree to which metal components eluted in the cationic polymerization initiator composition through the metal corroding property test inhibited the polymerization reaction. Table 3 below shows the obtained results.

◎: -0.2% or more
○: -0.5% or more and less than -0.2%
△: -0.8% or more and less than -0.5%
×: less than -0.8%

(Melt mass flow rate (MFR))

(1) MFR of cationic polymerization initiator composition (before metal corroding property test)

A polymerization reaction was carried out in the same manner as described for the POM content ratio of the cationic polymerization initiator composition (before metal corroding property test). Deactivation and end stabilization of the fluorine atom-containing cationic polymerization initiator (A) were performed on the obtained crude oxymethylene copolymer, followed by measurement of the melt mass flow rate (MFR).

The deactivation and end stabilization of the fluorine atom-containing cationic polymerization initiator (A) were performed as follows. The coarse particle-shaped crude oxymethylene copolymer collected from the reactor after the polymerization reaction was wet-pulverized in a 1% triethylamine solution (water : methanol: 1 : 4 (volume ratio)), washed twice with acetone, and dried under vacuum at 60°C for 2 hours using a vacuum dryer. To 100 parts by mass of the powdered crude oxymethylene copolymer after the drying, 0.3 parts by weight of triethylene glycol-bis[3-(3-t-butyl-5-methyl-4-hydroxyphenyl)propionate] (Irganox (registered trademark) 245, manufactured by BASF Japan Ltd.) and 0.05 parts by weight of melamine (manufactured by Mitsui Chemicals, Inc.) were added, and the mixture was melted and kneaded at 220°C for 20 minutes using a heating/kneading machine (Labo Plastomill 4C150, manufactured by Toyo Seiki Seisaku-sho, Ltd.).

MFR (g/10 min) of the end-stabilized oxymethylene copolymer was measured according to ASTM-D1238 (190°C, under a weight of 2.16 kg).

The MFR was evaluated on the basis of the following criteria. The smaller the MFR, the larger the molecular weight. Table 3 below shows the obtained results.

◎: MFR is 6.1 g/10 min or less.
○: MFR is more than 6.1 g/10 min and 6.2 g/10 min or less.
△: MFR is more than 6.2 g/10 min and 7.0 g/10 min or less.
×: MFR is more than 7.0 g/10 min.

(2) MFR of cationic polymerization initiator composition (after metal corroding property test)

MFR was similarly evaluated using the cationic polymerization initiator composition (after metal corroding property test) instead of the cationic polymerization initiator composition (before metal corroding property test). Table 3 below shows the obtained results.

(3) Assessment of change ratio in MFR

The change ratio (%) in MFR was calculated by the following expression.

Change ratio (%) = (MFR after metal corroding property test - MFR before metal corroding property test)/(MFR before metal corroding property test) × 100

The change ratio was evaluated on the basis of the following criteria. The lower the change ratio (the smaller the magnitude of the positive value) is, the lesser the degree to which metal components eluted in the cationic polymerization initiator composition through the metal corroding property test inhibited the polymerization reaction is. Table 3 below shows the obtained results.

◎: 3% or less

oB: more than 3% and 5% or less

△: more than 5% and 7% or less

×: more than 7%

[Table 3]

| | Metal corroding property | POM content ratio | | | MFR | | |
|---|---|---|---|---|---|---|---|
| | | Before corroding property test | After corroding property test | Assessment of change ratio | Before corroding property test | After corroding property test | Assessment of change ratio |
| Example 1 | ○ | ◎ | ◎ | ◎ | ○ | ○ | ◎ |
| Example 2 | ○ | ◎ | ◎ | ◎ | ○ | ○ | ○ |
| Example 3 | ○ | ◎ | ◎ | ◎ | ○ | ○ | △ |
| Example 4 | ○ | ◎ | ◎ | ◎ | ○ | ○ | ◎ |
| Example 5 | ○ | ◎ | ◎ | ◎ | ○ | ○ | O |
| Example 6 | ○ | ○ | ○ | ◎ | ○ | △ | △ |
| Example 7 | ○ | ○ | ◎ | ◎ | ○ | ○ | ◎ |
| Example 8 | ○ | ○ | ○ | ◎ | ○ | △ | ○ |
| Example 9 | ○ | ○ | △ | ○ | ○ | △ | △ |
| Example 10 | ○ | ◎ | ◎ | ◎ | ○ | ○ | ◎ |
| Example 11 | ○ | ◎ | ◎ | ◎ | ○ | ○ | ◎ |
| Example 12 | ○ | ◎ | ◎ | ◎ | ○ | ○ | △ |
| Comparative Example 1 | × | ◎ | △ | △ | △ | × | × |
| Comparative Example 2 | × | ◎ | △ | × | △ | × | △ |
| Comparative Example 3 | × | ◎ | ◎ | × | ○ | △ | × |
| Comparative Example 4 | × | ◎ | ◎ | × | ○ | ○ | × |

From the results of Table 3, it can be seen that the cationic polymerization initiator compositions of Examples 1 to 12 prevented corrosion of metal. From the fact that the change ratio in POM content ratio was low, it can be seen that since corrosion of metal was prevented, elution of metal components was suppressed, and inhibition of the polymerization reaction was suppressed. Further, from the fact that the change ratio in MFR was low, it can be seen that deterioration of the physical properties of the oxymethylene copolymer obtained was suppressed.

## Claims

1. A cationic polymerization initiator composition comprising a fluorine atom-containing cationic polymerization initiator (A), and a hydrophilic ether solvent (B) which does not have an acetal structure and an active hydroxyl group, wherein a content of the hydrophilic ether solvent (B) is 2.5 mass% or more with respect to a total mass of the cationic polymerization initiator composition.

2. The cationic polymerization initiator composition according to claim 1, wherein the fluorine atom-containing cationic

polymerization initiator (A) comprises a boron trifluoride compound.

3. The cationic polymerization initiator composition according to claim 2, wherein the fluorine atom-containing cationic polymerization initiator (A) comprises an aryl boron fluoride compound.

4. The cationic polymerization initiator composition according to claim 1, wherein the hydrophilic ether solvent (B) comprises at least one of chain ether containing 2 or more oxygen atoms and cyclic ether containing 2 or more oxygen atoms.

5. The cationic polymerization initiator composition according to claim 4, wherein the content of the hydrophilic ether solvent (B) is 2.5 to 60 mass% with respect to the total mass of the cationic polymerization initiator composition.

6. The cationic polymerization initiator composition according to claim 1, wherein the hydrophilic ether solvent (B) comprises at least one of chain ether containing one oxygen atom and cyclic ether containing one oxygen atom.

7. The cationic polymerization initiator composition according to claim 6, wherein the content of the hydrophilic ether solvent (B) is 2.5 to 20 mass% with respect to the total mass of the cationic polymerization initiator composition.

8. A method for producing an oxymethylene copolymer, comprising a polymerization step of preparing an oxymethylene polymer from a reaction solution which comprises a polymerization raw material (C) containing 1,3,5-trioxane, and the cationic polymerization initiator composition according to any one of claims 1 to 7.

9. The production method according to claim 8, wherein a content of a hydrophilic ether solvent (B) in the reaction solution is 18 ppm or more with respect to 1,3,5-trioxane.

10. The production method according to claim 9, wherein the content of the hydrophilic ether solvent (B) in the reaction solution is 18 to 100 ppm with respect to 1,3,5-trioxane.

11. A method for producing a molded article, comprising molding an oxymethylene polymer produced by the method according to claim 8.

## INTERNATIONAL SEARCH REPORT

International application No. **PCT/JP2024/006187**

### A. CLASSIFICATION OF SUBJECT MATTER

***C08G 2/06***(2006.01)i
FI: C08G2/06

According to International Patent Classification (IPC) or to both national classification and IPC

### B. FIELDS SEARCHED

Minimum documentation searched (classification system followed by classification symbols)

C08G2/00-2/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/054730 A1 (ASAHI KASEI KABUSHIKI KAISHA) 19 March 2020 (2020-03-19) claims 1-17, paragraphs [0091], [0120], [0148], [0182], example B8, comparative examples A5, D5 | 1-2, 4-5, 8-11 |
| Y | | 3 |
| A | | 6-7 |
| X | JP 2012-111830 A (ASAHI KASEI CHEMICALS CORPORATION) 14 June 2012 (2012-06-14) claims 1-4, examples, comparative examples | 1, 4-5, 8-11 |
| A | | 2-3, 6-7 |
| X | JP 11-12337 A (POLYPLASTICS CO., LTD.) 19 January 1999 (1999-01-19) claims 1-2, paragraph [0008], examples | 1-2, 6-11 |
| Y | | 3 |
| A | | 4-5 |

☑ Further documents are listed in the continuation of Box C. ☑ See patent family annex.

* Special categories of cited documents:
“A” document defining the general state of the art which is not considered to be of particular relevance
“D” document cited by the applicant in the international application
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| **11 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/006187**

**C. DOCUMENTS CONSIDERED TO BE RELEVANT**

| Category* | Citation of document, with indication, where appropriate, of the relevant passages | Relevant to claim No. |
|---|---|---|
| X | JP 2002-167415 A (POLYPLASTICS CO., LTD.) 11 June 2002 (2002-06-11) claims 1-7, paragraphs [0025]-[0026], examples | 1-2, 6-11 |
| Y | | 3 |
| A | | 4-5 |
| Y | JP 2003-510374 A (E.I. DU PONT DE NEMOURS AND COMPANY) 18 March 2003 (2003-03-18) claims 1-17, paragraph [0001], examples | 3 |
| A | | 1-2, 4-11 |
| A | JP 57-055916 A (ASAHI CHEMICAL INDUSTRY CO., LTD.) 03 April 1982 (1982-04-03) claims 1-16, examples | 1-11 |
| P, X | JP 2023-127499 A (ASAHI KASEI KABUSHIKI KAISHA) 13 September 2023 (2023-09-13) claims 1-9, paragraph [0022], example 7 | 1-2, 4, 8, 11 |
| P, A | | 3, 5-7, 9-10 |
| P, X | JP 2023-051807 A (ASAHI KASEI KABUSHIKI KAISHA) 11 April 2023 (2023-04-11) claims 1-3, paragraphs [0019]-[0020], examples | 1-2, 4, 8, 11 |
| P, A | | 3, 5-7, 9-10 |
| P, X | WO 2023/026907 A1 (MITSUBISHI GAS CHEMICAL COMPANY, INC.) 02 March 2023 (2023-03-02) claims 1-10, paragraph [0042], examples, comparative examples | 1-4, 6, 8-11 |
| P, A | | 5, 7 |

Form PCT/ISA/210 (second sheet) (July 2022)

**INTERNATIONAL SEARCH REPORT**
**Information on patent family members**

International application No.
**PCT/JP2024/006187**

| Patent document cited in search report | Publication date (day/month/year) | Patent family member(s) | Publication date (day/month/year) |
|---|---|---|---|
| WO 2020/054730 A1 | 19 March 2020 | US 2022/0033558 A1<br>claims 1-17, paragraphs [0212], [0213], [0271], [0311], [0363], example B8, comparative examples A5, D5 | |
| | | EP 3851466 A1 | |
| | | EP 4059970 A1 | |
| | | KR 10-2021-0008529 A | |
| | | CN 112513115 A | |
| JP 2012-111830 A | 14 June 2012 | (Family: none) | |
| JP 11-12337 A | 19 January 1999 | (Family: none) | |
| JP 2002-167415 A | 11 June 2002 | (Family: none) | |
| JP 2003-510374 A | 18 March 2003 | US 6072021 A<br>claims 1-13, column 1, lines 10-15, examples | |
| | | WO 99/021903 A1 | |
| | | EP 1025139 A1 | |
| | | CN 1276803 A | |
| JP 57-055916 A | 03 April 1982 | (Family: none) | |
| JP 2023-127499 A | 13 September 2023 | (Family: none) | |
| JP 2023-051807 A | 11 April 2023 | CN 115894829 A<br>claims 1-3, paragraphs [0042]-[0044], examples | |
| WO 2023/026907 A1 | 02 March 2023 | CN 117858912 A<br>claims 1-10, paragraph [0062], examples, comparative examples | |
| | | TW 202323341 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017149853 A